# EUROPÄISCHE PATENTSCHRIFT

(11) **EP 4 440 886 B1**
(45) Veröffentlichungstag und Bekanntmachung des Hinweises auf die Patenterteilung: **19.08.2026**
(21) Anmeldenummer: 22812427.7
(22) Anmeldetag: 14.11.2022
(51) Int. Cl.: B60T 8/34, B60T 13/66, B60T 13/68, B60T 17/22

(54) **VERFAHREN ZUR BESTIMMUNG EINER DRUCK-VOLUMEN-KENNLINIE EINER BREMSSATTELVORRICHTUNG**
METHOD OF DETERMINING A PRESSURE-VOLUME CHARACTERISTIC OF A BRAKE CALIPER DEVICE
PROCÉDÉ DE DÉTERMINATION D'UNE CARACTÉRISTIQUE PRESSION-VOLUME D'UN DISPOSITIF D'ÉTRIER DE FREIN

(30) Priorität: 02.12.2021 DE 102021213710
(43) Veröffentlichungstag der Anmeldung: 09.10.2024
(73) Patentinhaber: AUMOVIO Germany GmbH, 60488 Frankfurt am Main (DE)
(72) Erfinder: FERTIG, Felix Alexander, 30175 Hannover (DE); MÜNZ, Eberhard, 30175 Hannover (DE); WICKENHÖFER, Thorsten, 30175 Hannover (DE); WINTZER, Michael, 30175 Hannover (DE); NESENSOHN, Manuel, 30175 Hannover (DE)
(74) Vertreter: Aumovio Corporation
(86) Internationale Anmeldenummer: PCT/DE2022/200266
(87) Internationale Veröffentlichungsnummer: WO 2023/098957

(56) Entgegenhaltungen:
- CN-B- 105 004 535
- DE-A1- 102009 028 542

## Beschreibung

Die vorliegende Erfindung betrifft ein Verfahren zur Bestimmung einer Druck-Volumen-Kennlinie einer Bremssattelvorrichtung, wobei die Druck-Volumen-Kennlinie aus einer Anzahl von Druck-Volumen-Datenpaaren gebildet ist, wobei in jedem Druck-Volumen-Datenpaar ein Druckstützwert einem Volumenstützwert zugeordnet ist.

Ein solches Verfahren ist beispielsweise aus der DE 10 2009 028542 A1 bekannt. Diese offenbart durch Ventilschalten verschiedene Bereiche der Bremsanlage hydraulisch an und abzukoppeln und einzeln zu vermessen.

Eine derartige Bremssattelvorrichtung kann beispielsweise in einem Kraftfahrzeug zum Einsatz kommen. Das Verhalten der Bremssattelvorrichtung in einem Bremsvorgang des Kraftfahrzeugs wird für eine hydraulische Druckregelung über die Druck-Volumen-Kennlinie beschrieben. Diese gibt ein Volumen in Abhängigkeit von einem Druck an. Die Druck-Volumen-Kennlinie sagt damit aus, welches Volumen in einen Bremssattel der Bremssattelvorrichtung verschoben werden muss, um einen gewünschten Druck an einem Bremskolben des Bremssattels der Bremssattelvorrichtung zu erzeugen.

Die Druck-Volumen-Kennlinie wird dabei herkömmlich anhand von einer Anzahl von Druck-Volumen-Datenpaaren manuell bestimmt. Es werden also beispielsweise zehn Druck-Volumen-Datenpaare manuell mit Hilfe von externen Messapparaten in der Bremssattelvorrichtung appliziert, um die Druck-Volumen-Kennlinie zu bestimmen. Diese manuelle Applikation der Druck-Volumen-Kennlinie ist zum einen mit einem hohen Aufwand verbunden. Sie ist zeitaufwändig, fehleranfällig und muss gegebenenfalls immer wieder neu durchgeführt werden. Zum anderen kann die manuelle Applikation auch eine mögliche Exemplarstreuung und eine Veränderung der Druck-Volumen-Kennlinie über die Lebenszeit der Bremssattelvorrichtung nicht darstellen.

Die manuelle Bestimmung der Druck-Volumen-Kennlinie erfolgt typischerweise im Rahmen eines Entwicklungsprojekts für einen vorbestimmten Typ einer Bremssattelvorrichtung. In dieser Bremssattelvorrichtung wird die Druck-Volumen-Kennlinie dann gegen Ende des Entwicklungsprojekts auf Grundlage der applizierten Druck-Volumen-Kennlinie der vermessenen Bremssattelvorrichtung oder Vorgaben innerhalb des Entwicklungsprojekts fest definiert. Eine derartige Druck-Volumen-Kennlinie kann jedoch aufgrund von Fertigungstoleranzen für mehrere Bremssattelvorrichtungen der gleichen Bauart variieren. Hierdurch kann die Genauigkeit der Druck-Volumen-Kennlinie dann im Betrieb der Bremssattelvorrichtung schlechter ausfallen, als noch im Rahmen des Entwicklungsprojekts ermittelt.

Daneben kommt es nach dem Entwicklungsprojekt im Rahmen des Betriebs der Bremssattelvorrichtung auch zu einem Verschleiß eines Bremsbelags und einer Bremsscheibe der Bremssattelvorrichtung. Dies wiederum verändert die Druck-Volumen-Kennlinie ebenfalls; die Volumenaufnahme des Bremssattels sinkt typischerweise (das heißt, die Steifigkeit des Bremssattels nimmt zu). Es treten bei zunehmendem Verschleiß der Bremssattelvorrichtung zusätzliche Ungenauigkeiten in der Druck-Volumen-Kennlinie auf.

Insgesamt verursachen die beschriebenen Ungenauigkeiten in der Druck-Volumen-Kennlinie Verschlechterungen in der Druckregelgüte und auch Robustheitsverschlechterungen der Bremssattelvorrichtung. Dabei sollte ebenso bedacht werden, dass die Druck-Volumen-Kennlinie auch in anderen Teilen der Software eines Kraftfahrzeugs Verwendung findet, wie beispielsweise in volumenbasierten Sicherheitsmonitoren oder der volumenbasierten Regelung.

Der Erfindung liegt daher die Aufgabe zugrunde, ein Verfahren zur automatisierten Bestimmung der Druck-Volumen-Kennlinie bereitzustellen, das Ungenauigkeiten der Druck-Volumen-Kennlinie aufgrund von Verschleiß und Fertigungstoleranzen der Bremssattelvorrichtung reduzieren kann.

Diese Aufgabe wird erfindungsgemäß dadurch gelöst, dass der Volumenstützwert mittels einer Ausgleichsrechnung auf einer Anzahl von
Druck-Volumen-Hilfsdatenpaaren bestimmt wird.

Die Druck-Volumen-Hilfsdatenpaare können vordefiniert werden. Die manuelle Auswahl der Druck-Volumen-Hilfsdatenpaare kann damit entfallen. Der Aufwand der manuellen Applikation der Druck-Volumen-Kennlinie wird durch Standardisierung reduziert. Auch wird die Bestimmung der Druck-Volumen-Kennlinie mittels Durchführung der Ausgleichsrechnung auf den Druck-Volumen-Hilfsdatenpaaren automatisiert. Damit wird insgesamt die Applikation der Druck-Volumen-Kennlinie vereinfacht. Das erfindungsgemäße Verfahren eignet sich damit auch für zwei grundlegende Anwendungsfälle. Zum einen kann es verwendet werden, um eine Kalibrierung der Druck-Volumen-Kennlinie im Rahmen eines Entwicklungsprojekts (End of Line, Werkstatt oder Serienapplikation) durchzuführen. Zum anderen kann es verwendet werden, um eine automatisierte Adaption der Druck-Volumen-Kennlinie im Falle von Verschleiß der Bremssattelvorrichtung im Betrieb durchzuführen. Dabei können Einflüsse der Temperatur einer Bremsflüssigkeit der Bremssattelvorrichtung oder von deren Bremsscheibe bei der Bestimmung der Druck-Volumen-Kennlinie vernachlässigt oder durch sorgsam gewählte Umgebungsbedingungen ausgeschlossen werden. Denn diese Parameter führen im Vergleich zum Verschleiß lediglich zu einer temporären Veränderung der Druck-Volumen-Kennlinie. Insgesamt kann so den Problemen der Abnahme der Regelgüte sowie der Verschlechterung der Robustheit von hydraulischen Monitoren entgegengewirkt werden.

Dabei ist erfindungsgemäß vorgesehen, dass die Druck-Volumen-Hilfsdatenpaare in einer lokalen Umgebung des dem Volumenstützwert zugeordneten Druckstützwerts Druckhilfsstützwerte aufweisen, die kleiner und/oder größer als der zugeordnete Druckstützwert sind.

Im Rahmen des Verfahrens wird also zunächst eine Anzahl von Druck-Volumen-Datenpaaren ausgewählt, mit denen die Druck-Volumen-Kennlinie bestimmt werden soll. Hierzu werden beispielsweise Druckstützwerte der Druck-Volumen-Kennlinie ausgewählt und vordefiniert. Diese Druckstützwerte decken vorzugsweise den gesamten Wertebereich des Softwaresignals für den Druck der Bremssattelvorrichtung ab. Die Druckstützwerte können beispielsweise auf 0, 1,25, 2,5, 5, 10, 20, 40, 80, 160, 327 bar gewählt und definiert werden. In einem nächsten Schritt werden dann für jeden dieser vordefinierten Druckstützwerte die Druckhilfsstützwerte gebildet. Hierzu können beispielsweise in einer lokalen Umgebung unterhalb eines vorgegebenen Druckstützwerts zehn Druckhilfsstützwerte ausgewählt werden. Zusätzlich oder alternativ können in einer lokalen Umgebung oberhalb des vorgegebenen Druckstützwerts weitere zehn Druckhilfsstützwerte ausgewählt werden. Die lokale Umgebung sollte dabei möglichst auf die unmittelbare Nähe des vorgegebenen Druckstützwerts zugeschnitten sein. Wird also beispielsweise ein Druckstützwert von 1,25 bar ausgewählt, kann man die lokale Umgebung unterhalb dieses vorgegebenen Druckstützwerts beispielsweise auf das Druckintervall [0,75 bar, 1,25 bar[ festlegen. Die lokale Umgebung oberhalb des vorgegebenen Druckstützwerts kann in dem Intervall ]1,25 bar, 1,75 bar] liegen. Diese Druck-Volumen-Hilfsdatenpaare werden erfasst und gespeichert.

Weiter ist bevorzugt, dass die Ausgleichsrechnung, vorzugsweise mittels der Methode der kleinsten Quadrate, eine Ausgleichsfunktion auf den Druck-Volumen-Hilfsdatenpaaren bestimmt, welche das Volumen als Funktion des Drucks in der lokalen Umgebung angibt.

Die Bestimmung des jeweiligen Volumenstützwerts zu einem zugeordneten Druckstützwert erfolgt unter Ausnutzung der erfassten
Druck-Volumen-Hilfsdatenpaare. Hierzu wird zur Filterung von Ausreißern unter den Messdaten eine Ausgleichsfunktion auf den Druck-Volumen-Hilfsdatenpaaren bestimmt. Diese Ausgleichsfunktion kann beispielsweise über die Methode der kleinsten Quadrate ermittelt werden. Es kann sich beispielsweise um ein quadratisches Polynom handeln. Die Ausgleichsfunktion fasst damit die ermittelten Druck-Volumen-Hilfsdatenpaare bestmöglich zusammen.

Auch ist vorteilhaft, dass der Volumenstützwert als Funktionswert der Ausgleichsfunktion an der Stelle des zugeordneten Druckstützwerts bestimmt wird. Die Ausgleichsfunktion fasst die ermittelten Druck-Volumen-Hilfsdatenpaare bestmöglich zusammen und kann Ausreißer unter den Messdaten zuverlässig herausfiltern. Daher wird der Volumenstützwert für einen vordefinierten Druckstützwert ermittelt, indem der Funktionswert der Ausgleichsfunktion an der Stelle des jeweiligen Druckstützwerts zugrunde gelegt wird. Die Bestimmung der Druck-Volumen-Kennlinie ist damit insgesamt weniger fehleranfällig. Der Zeitaufwand für ihre Ermittlung kann reduziert werden.

Bei alldem ebenso von Vorteil, dass die Druck-Volumen-Hilfsdatenpaare mittels einer Sensoreinrichtung an der Bremssattelvorrichtung gemessen und/oder mittels einer Schätzung bestimmt werden.

Die Bestimmung der Druck-Volumen-Kennlinie erfordert zu ihrer möglichst genauen Abbildung theoretisch Druckaufbauten in der Bremssattelvorrichtung von bis zu einschließlich 327 bar. Dies ist allerdings bereits aufgrund der Festigkeit des Bremssattels nicht möglich. Auch ist es aus Sicht der Lastzyklen (Biegewechselbeanspruchung) nicht sinnvoll, derartig hohe Druckaufbauten durchzuführen. In der Regel wird man daher lediglich in einem Bereich bis zu maximal 160 bar mit der Sensoreinrichtung an der Bremssattelvorrichtung die Druck-Volumen-Hilfsdatenpaare bestimmen können. Im Rahmen der Kalibrierung der Druck-Volumen-Kennlinie empfiehlt es sich daher, Druck-Volumen-Hilfsdatenpaare bis zu 160 bar zu verwenden, da diese Kalibrierung eher ein statisches Werkzeug zur einmaligen Bestimmung der Druck-Volumen-Kennlinie ist. Im Rahmen der Adaption der Druck-Volumen-Kennlinie an den Verschleiß der Bremssattelvorrichtung ist dies jedoch nicht möglich, da sich dort die Datenpaare aus dem normalen Betrieb der Bremssattelvorrichtung ergeben, in dem in der Regel wesentlich geringere Drücke vorherrschen. Dennoch soll die Druck-Volumen-Kennlinie in beiden Arten des Betriebs trotz fehlender Daten aus der Sensoreinrichtung möglichst den gesamten Bereich der Druckstützwerte abbilden können, also beispielsweise bis zu einem Druck von 327 bar. Zu diesem Zweck können die fehlenden Sensordaten mittels einer Schätzung von Druck-Volumen-Hilfsdatenpaaren in den nicht durch Messung zugänglichen Druckbereichen ergänzt werden.

Dabei ist bevorzugt, dass die Schätzung in einem linearen Bereich der Druck-Volumen-Kennlinie mittels einer Extrapolation einer Anzahl von in dem linearen Bereich gemessenen Druck-Volumen-Hilfsdatenpaaren durchgeführt wird.

Die Schätzung der Druck-Volumen-Hilfsdatenpaare wird für niedrige und hohe Drücke getrennt durchgeführt. Hierbei macht man sich die folgende Eigenschaft des Bremssattels der Bremssattelvorrichtung zu nutze. In einem hohen Druckbereich (ab etwa 80 bar) wird die Druck-Volumen-Kennlinie fast ausschließlich durch den Einfluss der "steifen" Komponenten des Bremssattels (Material des Gehäuses des Bremssattels) bestimmt. Dadurch ergibt sich in diesen hohen Druckbereichen ein annährend linearer Zusammenhang der Druck-Volumen-Kennlinie. Liegen nun also Sensordaten bis in den hohen Druckbereich vor, so kann aufgrund des linearen Zusammenhangs eine lineare Extrapolation der gesuchten Volumenstützwerte bei noch höheren Drücken (für die keine Messdaten mehr vorliegen) erfolgen.

Alternativ ist vorteilhaft vorgesehen, dass die Schätzung in einem nichtlinearen Bereich der Druck-Volumen-Kennlinie mittels einer Parallelverschiebung einer Druck-Volumen-Hilfskennlinie aus einer Anzahl von in dem nichtlinearen Bereich gemessenen Druck-Volumen-Hilfsdatenpaaren durchgeführt wird.

Diese Art der Schätzung ist für den niedrigen Druckbereich vorteilhaft. Denn im niedrigen Druckbereich (bis etwa 80 bar) überwiegt der Einfluss der "weichen" Komponenten des Bremssattels (Dichtungen, Bremsbelag, und ähnliches). Damit ergibt sich in diesem niedrigen Druckbereich ein nichtlinearer Zusammenhang für die Druck-Volumen-Kennlinie; es überlagern sich die Einflüsse der weichen und der steifen Komponenten des Bremssattels. Liegen also ausschließlich Messdaten der Sensoreinrichtung in dem niedrigen Druckbereich vor, so können diese Messdaten aufgrund des nichtlinearen Zusammenhangs nicht einfach extrapoliert werden. Allerdings können in diesem Bereich bereits aus früheren Messungen mittels der Sensoreinrichtung (beispielsweise im Rahmen einer vorherigen Kalibrierung) gemessene Daten vorliegen, die in diesem Bereich eine Druck-Volumen-Hilfskennlinie bilden. Diese Druck-Volumen-Hilfskennlinie kann dann im Rahmen der Schätzung herangezogen und um eine geeignete Volumendifferenz parallel auf die benötigten (aber nicht vermessenen) Datenpaare verschoben werden. Hierdurch lässt sich auch im Betrieb der Bremssattelvorrichtung eine Druck-Volumen-Kennlinie bei niedrigen Drücken bestimmen und an den Verschleiß der Bremssattelvorrichtung anpassen. Dabei sollte diese Anpassung jedoch von einem Benutzer der Bremssattelvorrichtung unbemerkt bleiben. Die Druck-Volumen-Kennlinie darf sich daher innerhalb kurzer Zeit nicht zu stark ändern. Aus diesem Grund kann für die Adaption der Druck-Volumen-Kennlinie eine maximale Lernschrittweite verwendet werden, sodass sich die Druck-Volumen-Kennlinie über mehrere Adaptionen hinweg nur langsam und nicht abrupt der tatsächlichen Druck-Volumen-Kennlinie annähert. Nicht zuletzt ist vorteilhaft, dass die Druck-Volumen-Kennlinie derartig bestimmt wird, dass sie einen streng monoton steigenden Verlauf, und/oder einen konkaven Verlauf, und/oder dass ihre Ableitung nur ein Maximum im gesamten Bereich der Druckstützwerte aufweist.

Bevor man die bestimmte Druck-Volumen-Kennlinie letztlich in einer Bremssattelvorrichtung verwenden kann, muss geprüft werden, ob die bestimmte Druck-Volumen-Kennlinie gewisse mathematische Kriterien erfüllt. Diese Kriterien sind der streng monoton steigende Verlauf der Druck-Volumen-Kennlinie, eine maximal 30 %-ige Abweichung der Druck-Volumen-Kennlinie über die Lebenszeit der Bremssattelvorrichtung aufgrund von Verschleiß, der konkave Verlauf der Druck-Volumen-Kennlinie und dass die Ableitung der Druck-Volumen-Kennlinie nur ein Maximum im gesamten Bereich der Druckstützwerte (beispielsweise von 0 bar bis 327 bar) aufweist. Diese Kriterien lassen sich anhand von empirischen Daten zu den gängigsten Volumenverbrauchern (Scheibenbremsen, Low Drag Bremssattel, Trommelbremsen und Federverbraucher) ableiten.

Schließlich ist von Vorteil, dass die Bestimmung der Druck-Volumen-Kennlinie im Betrieb der Bremssattelvorrichtung durchgeführt und zur Kompensation von Verschleißerscheinungen der Bremssattelvorrichtung verwendet wird.

Somit lässt sich eine hohe Genauigkeit der Druck-Volumen-Kennlinie trotz Verschleiß in der Bremssattelvorrichtung über deren Lebenszeit sicherstellen. Es wird eine Verbesserung der hydraulischen Regelgüte sowie der Robustheit von hydraulischen Monitoren im Betrieb gewährleistet.

Die oben beschriebenen Eigenschaften, Merkmale und Vorteile der vorliegenden Erfindung, sowie die Art und Weise, wie diese erreicht werden, werden klarer und deutlicher verständlich im Zusammenhang mit der folgenden Beschreibung der Ausführungsformen, die im Zusammenhang mit den Zeichnungen erläutert werden.

Es zeigen:
Fig. 1 eine Druck-Volumen-Kennlinie an einem Druckstützwert mit einer Anzahl von Druck-Volumen-Hilfsdatenpaaren;
Fig. 2 eine Schätzung einer Druck-Volumen-Kennlinie.

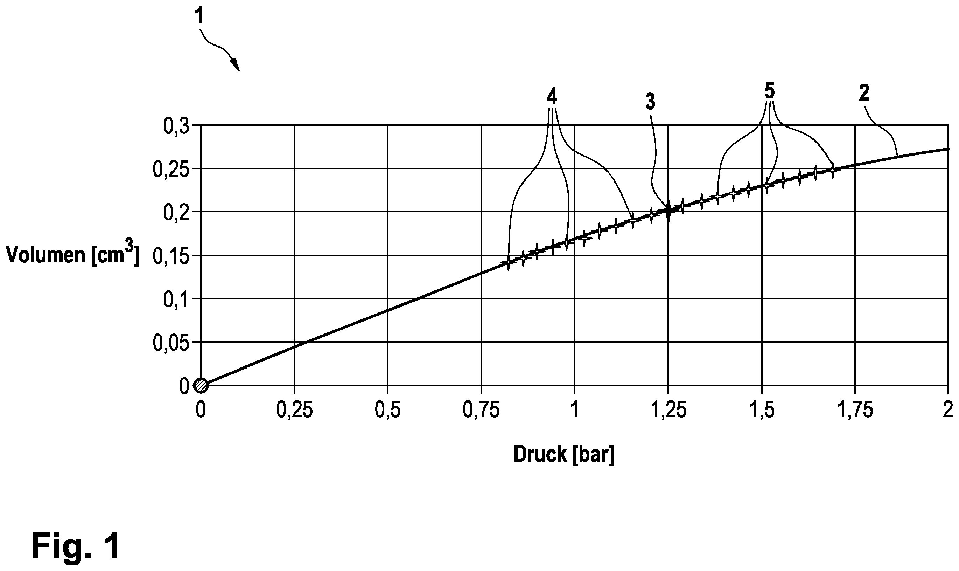

In Fig. 1 ist ein Druck-Volumen-Diagramm 1, in dem eine Druck-Volumen-Kennlinie 2 einer Bremssattelvorrichtung eingezeichnet ist. Diese Druck-Volumen-Kennlinie 2 gibt ein Volumen (vertikale Achse des Druck-Volumen-Diagramms 1) in Abhängigkeit von einem Druck (horizontale Achse des Druck-Volumen-Diagramms 1) an. Die Druck-Volumen-Kennlinie 2 sagt damit aus, welches Volumen in einen Bremssattel der Bremssattelvorrichtung verschoben werden muss, um einen gewünschten Druck an einem Bremskolben des Bremssattels der Bremssattelvorrichtung zu erzeugen.

Zur Bestimmung der Druck-Volumen-Kennlinie 2 wird der Druckbereich zunächst in eine Anzahl von Druckstützwerten unterteilt. Es können beispielsweise zehn Druckstützwerte mit 0, 1,25, 2,5, 5, 10, 20, 40, 80, 160, 327 bar vordefiniert werden, die den gesamten Wertebereich eines Softwaresignals der Druckstützwerte für die Bremssattelvorrichtung abdecken. In Fig. 1 ist beispielhaft eine lokale Umgebung um einen Druckstützwert von 1,25 bar gezeigt. Zu diesem Druckstützwert kann dann mittels des erfindungsgemäßen Verfahrens ein Volumenstützwert bestimmt werden. In dem gezeigten Beispiel liegt dieser Volumenstützwert bei 0,2 cm³. Der Druckstützwert bildet zusammen mit dem Volumenstützwert ein Druck-Volumen-Datenpaar 3.

Der Druckstützwert von 1,25 bar wird in dem gezeigten Beispiel vordefiniert. Zur Bestimmung des assoziierten Volumenstützwerts des Druck-Volumen-Datenpaars 3 werden erfindungsgemäß Druck-Volumen-Hilfsdatenpaare 4, 5 herangezogen. Ein erster Satz von Druck-Volumen-Hilfsdatenpaaren 4 wird dabei für Druckhilfsstützwerte unterhalb des betrachteten Druckstützwerts von 1,25 bar festgelegt. Diese Druckhilfsstützwerte finden sich in einer lokalen Umgebung des Druckstützwerts von 1,25 bar in dem Intervall von [0,75 bar, 1,25 bar[. Weiterhin wird ein zweiter Satz von Druck-Volumen-Hilfsstützwerten 5 für Druckhilfsstützwerte oberhalb des betrachteten Druckstützwerts von 1,25 bar festgelegt. Diese Druckhilfsstützwerte finden sich in einer lokalen Umgebung des Druckstützwerts von 1,25 bar in dem Intervall von ]1,25 bar, 1,75 bar]. Der erste Satz von Druck-Volumen-Hilfsdatenpaaren 4 umfasst in dem Beispiel der Fig. 1 zehn Druck-Volumen-Hilfsdatenpaare. Der zweite Satz von Druck-Volumen-Hilfsdatenpaaren 5 umfasst in dem Beispiel der Fig. 1 zehn Druck-Volumen-Hilfsdatenpaare. Zur Filterung von Ausreißern in den Messdaten ist im gezeigten Beispiel ein quadratisches Polynom mittels der Methode der kleinsten Quadrate berechnet worden, welches als Ausgleichsfunktion durch die Druck-Volumen-Hilfsdatenpaare 4, 5 gelegt wurde. Die gespeicherten Druck-Volumen-Hilfsdatenpaare 4, 5 werden damit bestmöglich zusammengefasst. Mithilfe des berechneten Polynoms wird dann der Volumenstützwert von 0,2 cm³ für den vorgegebenen Druckstützwert von 1,25 bar bestimmt. Die Bestimmung der Druck-Volumen-Kennlinie 2 ist damit insgesamt weniger fehleranfällig. Der Zeitaufwand für ihre Ermittlung kann reduziert werden.

Die Bestimmung der Druck-Volumen-Kennlinie 2 erfordert zu ihrer möglichst genauen Abbildung theoretisch Druckaufbauten in der Bremssattelvorrichtung von bis zu einschließlich 327 bar. Dies ist allerdings bereits aufgrund der Festigkeit des Bremssattels nicht möglich. Auch ist es aus Sicht der Lastzyklen (Biegewechselbeanspruchung) nicht sinnvoll, derartig hohe Druckaufbauten durchzuführen. In der Regel wird man daher lediglich in einem Bereich bis zu maximal 160 bar mit der Sensoreinrichtung an der Bremssattelvorrichtung die Druck-Volumen-Hilfsdatenpaare 4, 5 bestimmen können. Im Rahmen der Kalibrierung der Druck-Volumen-Kennlinie 2 empfiehlt es sich daher, Druck-Volumen-Hilfsdatenpaare 4, 5 bis zu 160 bar zu verwenden, da diese Kalibrierung eher ein statisches Werkzeug zur einmaligen Bestimmung der Druck-Volumen-Kennlinie 2 ist. Im Rahmen der Adaption der Druck-Volumen-Kennlinie 2 an den Verschleiß der Bremssattelvorrichtung ist dies jedoch nicht möglich, da sich dort die Datenpaare aus dem normalen Betrieb der Bremssattelvorrichtung ergeben, in dem in der Regel wesentlich geringere Drücke vorherrschen. Dennoch soll die Druck-Volumen-Kennlinie 2 in beiden Arten des Betriebs trotz fehlender Daten aus der Sensoreinrichtung möglichst den gesamten Bereich der Druckstützwerte abbilden können, also beispielsweise bis zu einem Druck von 327 bar. Zu diesem Zweck können die fehlenden Sensordaten mittels einer Schätzung von Druck-Volumen-Hilfsdatenpaaren 4, 5 in den nicht durch Messung zugänglichen Druckbereichen ergänzt werden. Die Schätzung der Druck-Volumen-Hilfsdatenpaare 4, 5 wird für niedrige und hohe Drücke getrennt durchgeführt.

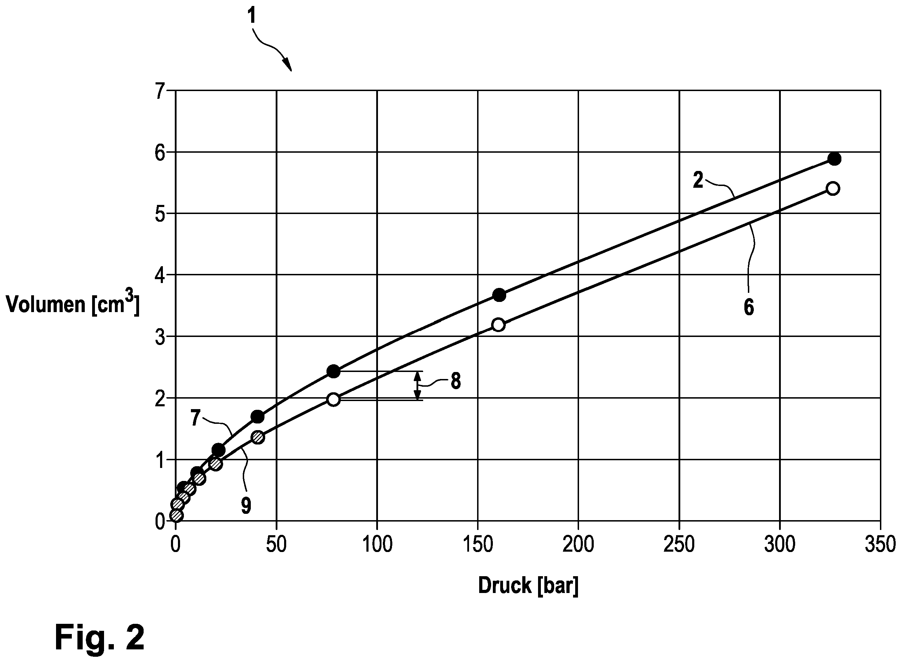

In Fig. 2 ist die Schätzung der Druck-Volumen-Hilfsdatenpaare 4, 5 im Detail veranschaulicht. Hierbei macht man sich die folgende Eigenschaft des Bremssattels der Bremssattelvorrichtung zu nutze. In einem hohen Druckbereich (ab etwa 80 bar) wird die Druck-Volumen-Kennlinie 2 fast ausschließlich durch den Einfluss der "steifen" Komponenten des Bremssattels (Material des Gehäuses des Bremssattels) bestimmt. Dadurch ergibt sich in diesen hohen Druckbereichen ein annährend linearer Zusammenhang der Druck-Volumen-Kennlinie 2. Liegen nun also Sensordaten bis in den hohen Druckbereich vor, so kann aufgrund des linearen Zusammenhangs eine lineare Extrapolation 6 der gesuchten Volumenstützwerte bei noch höheren Drücken (für die keine Messdaten mehr vorliegen) erfolgen.

Die Schätzung erfolgt für den niedrigen Druckbereich mittels einer Parallelverschiebung. Denn im niedrigen Druckbereich (bis etwa 80 bar) überwiegt der Einfluss der "weichen" Komponenten des Bremssattels (Dichtungen, Bremsbelag, und ähnliches). Damit ergibt sich in diesem niedrigen Druckbereich ein nichtlinearer Zusammenhang für die Druck-Volumen-Kennlinie 2; es überlagern sich die Einflüsse der weichen und der steifen Komponenten des Bremssattels. Liegen also ausschließlich Messdaten der Sensoreinrichtung in dem niedrigen Druckbereich vor, so können diese Messdaten aufgrund des nichtlinearen Zusammenhangs nicht einfach extrapoliert werden. Allerdings können in diesem Bereich bereits aus früheren Messungen mittels der Sensoreinrichtung (beispielsweise im Rahmen einer vorherigen Kalibrierung) gemessene Daten vorliegen, die in diesem Bereich eine Druck-Volumen-Hilfskennlinie 7 bilden. Diese Druck-Volumen-Hilfskennlinie 7 kann dann im Rahmen der Schätzung herangezogen und um eine geeignete Volumendifferenz 8 parallel auf die benötigten Datenpaare verschoben werden. Hierdurch lässt sich auch im Betrieb der Bremssattelvorrichtung eine angepasste Druck-Volumen-Kennlinie 9 bei niedrigen Drücken bestimmen und an den Verschleiß der Bremssattelvorrichtung anpassen.

Obwohl die vorliegende Erfindung im Detail durch bevorzugte Ausführungsformen näher illustriert und beschrieben wurde, so ist sie nicht durch die offenbarten Beispiele beschränkt.

### Bezugszeichenliste

- 1: Druck-Volumen-Diagramm
- 2: Druck-Volumen-Kennlinie
- 3: Druck-Volumen-Datenpaar
- 4: Druck-Volumen-Hilfsdatenpaare
- 5: Druck-Volumen-Hilfsdatenpaare
- 6: lineare Extrapolation
- 7: Druck-Volumen-Hilfskennlinie
- 8: Volumendifferenz
- 9: angepasste Druck-Volumen-Kennlinie

## Patentansprüche

1. Verfahren zur Bestimmung einer Druck-Volumen-Kennlinie (2; 6, 9) einer Bremssattelvorrichtung, wobei die Druck-Volumen-Kennlinie (2; 6, 9) aus einer Anzahl von Druck-Volumen-Datenpaaren (3) gebildet ist, wobei in jedem Druck-Volumen-Datenpaar (3) ein Druckstützwert einem Volumenstützwert zugeordnet ist, **dadurch gekennzeichnet, dass** der Volumenstützwert mittels einer Ausgleichsrechnung auf einer Anzahl von Druck-Volumen-Hilfsdatenpaaren (4, 5) bestimmt wird, wobei die Druck-Volumen-Hilfsdatenpaare (4, 5) in einer lokalen Umgebung des dem Volumenstützwert zugeordneten Druckstützwerts Druckhilfsstützwerte aufweisen, die kleiner und/oder größer als der zugeordnete Druckstützwert sind.

2. Verfahren nach Anspruch 1, wobei die Ausgleichsrechnung, vorzugsweise mittels der Methode der kleinsten Quadrate, eine Ausgleichsfunktion auf den Druck-Volumen-Hilfsdatenpaaren (4, 5) bestimmt, welche das Volumen als Funktion des Drucks in der lokalen Umgebung angibt.

3. Verfahren nach Anspruch 2, wobei der Volumenstützwert als Funktionswert der Ausgleichsfunktion an der Stelle des zugeordneten Druckstützwerts bestimmt wird.

4. Verfahren nach einem der Ansprüche 1 bis 3, wobei die Druck-Volumen-Hilfsdatenpaare (4, 5) mittels einer Sensoreinrichtung an der Bremssattelvorrichtung gemessen und/oder mittels einer Schätzung bestimmt werden.

5. Verfahren nach Anspruch 4, wobei die Schätzung in einem linearen Bereich der Druck-Volumen-Kennlinie (2; 6, 9) mittels einer Extrapolation (6) einer Anzahl von in dem linearen Bereich gemessenen Druck-Volumen-Hilfsdatenpaaren (4, 5) durchgeführt wird.

6. Verfahren nach Anspruch 4, wobei die Schätzung in einem nichtlinearen Bereich der Druck-Volumen-Kennlinie (2; 6, 9) mittels einer Parallelverschiebung einer Druck-Volumen-Hilfskennlinie (7) aus einer Anzahl von in dem nichtlinearen Bereich gemessenen Druck-Volumen-Hilfsdatenpaaren (4, 5) durchgeführt wird.

7. Verfahren nach einem der Ansprüche 1 bis 6, wobei die Druck-Volumen-Kennlinie (2; 6, 9) derartig bestimmt wird, dass sie einen streng monoton steigenden Verlauf, und/oder einen konkaven Verlauf, und/oder dass ihre Ableitung nur ein Maximum im gesamten Bereich der Druckstützwerte aufweist.

8. Verfahren nach einem der Ansprüche 1 bis 7, wobei die Bestimmung der Druck-Volumen-Kennlinie (2; 6, 9) im Betrieb der Bremssattelvorrichtung durchgeführt und zur Kompensation von Verschleißerscheinungen der Bremssattelvorrichtung verwendet wird.

## Claims

1. A method for determining a pressure-volume characteristic (2; 6, 9) of a brake calliper device, wherein the pressure-volume characteristic (2; 6, 9) is formed from a number of pressure-volume data pairs (3), wherein a pressure interpolation value is assigned to a volume interpolation value in each pressure-volume data pair (3), **characterised in that** the volume interpolation value is determined by means of a compensation calculation on a number of auxiliary pressure-volume data pairs (4, 5), wherein the auxiliary pressure-volume data pairs (4, 5) in a local environment of the pressure interpolation value assigned to the volume interpolation value have auxiliary pressure interpolation values which are smaller and/or greater than the assigned pressure interpolation value.

2. The method as claimed in claim 1, wherein the compensation calculation determines, preferably by means of the method of least squares, a balancing function on the auxiliary pressure-volume data pairs (4, 5) that indicates the volume as a function of the pressure in the local environment.

3. The method as claimed in claim 2, wherein the volume interpolation value is determined as a function value of the balancing function at the location of the assigned pressure interpolation value.

4. The method as claimed in one of claims 1 to 3, wherein the auxiliary pressure-volume data pairs (4, 5) are measured by means of a sensor apparatus on the brake calliper device and/or are determined by means of an estimation.

5. The method as claimed in claim 4, wherein the estimation is carried out in a linear region of the pressure-volume characteristic (2; 6, 9) by means of an extrapolation (6) of a number of auxiliary pressure-volume data pairs (4, 5) measured in the linear region.

6. The method as claimed in claim 4, wherein the estimation is carried out in a non-linear region of the pressure-volume characteristic (2; 6, 9) by means of a parallel displacement of an auxiliary pressure-volume characteristic (7) from a number of auxiliary pressure-volume data pairs (4, 5) measured in the non-linear region.

7. The method as claimed in any one of claims 1 to 6, wherein the pressure-volume characteristic (2; 6, 9) is determined in such a way that it has a strictly monotonously increasing progression, and/or a concave progression and/or that its derivation has only one maximum in the entire range of the pressure interpolation values.

8. The method as claimed in any one of claims 1 to 7, wherein the determination of the pressure-volume characteristic (2; 6, 9) is carried out during the operation of the brake calliper device and is used to compensate for wear effects of the brake calliper device.

## Revendications

1. Procédé de détermination d'une caractéristique pression-volume (2 ; 6, 9) d'un dispositif d'étrier de frein, dans lequel la caractéristique pression-volume (2 ; 6, 9) est formée à partir d'un certain nombre de paires de données pression-volume (3), dans lequel, dans chaque paire de données pression-volume (3), une valeur de référence de pression est associée à une valeur de référence de volume, **caractérisé en ce que** la valeur de référence de volume est déterminée au moyen d'un ajustement de courbe à partir d'un nombre de paires de données auxiliaires pression-volume (4, 5), dans lequel les paires de données auxiliaires pression-volume (4, 5) présentent des valeurs de référence de pression dans un environnement local de la valeur de référence de pression associée à la valeur de référence de volume qui sont inférieures et/ou supérieures à la valeur de référence de pression associée.

2. Procédé selon la revendication 1, dans lequel l'ajustement de courbe, de préférence au moyen de la méthode des moindres carrés, détermine une fonction d'ajustement à partir des paires de données auxiliaires pression-volume (4, 5), qui indiquent le volume en fonction de la pression dans l'environnement local.

3. Procédé selon la revendication 2, dans lequel la valeur de référence de volume est déterminée comme une valeur de fonction de la fonction d'ajustement au niveau de la valeur de référence de pression associée.

4. Procédé selon l'une quelconque des revendications 1 à 3, dans lequel les paires de données auxiliaires pression-volume (4, 5) sont mesurées au moyen d'un dispositif de capteur sur le dispositif d'étrier de frein et/ou déterminées au moyen d'une estimation.

5. Procédé selon la revendication 4, dans lequel l'estimation dans une région linéaire de la caractéristique pression-volume (2 ; 6, 9) est réalisée au moyen d'une extrapolation (6) d'un nombre de paires de données auxiliaires pression-volume (4, 5) mesurées dans la région linéaire.

6. Procédé selon la revendication 4, dans lequel l'estimation dans une région non linéaire de la caractéristique pression-volume (2 ; 6, 9) est réalisée au moyen d'un décalage parallèle d'une caractéristique auxiliaire pression-volume (7) à partir d'un nombre de paires de données auxiliaires pression-volume (4, 5) mesurées dans la région non linéaire.

7. Procédé selon l'une quelconque des revendications 1 à 6, dans lequel la caractéristique pression-volume (2 ; 6, 9) est déterminée de telle sorte qu'elle présente un profil strictement croissant de manière monotone, et/ou un profil concave, et/ou que sa dérivée ne présente qu'un seul maximum sur l'ensemble de la plage des valeurs de référence de pression.

8. Procédé selon l'une quelconque des revendications 1 à 7, dans lequel la détermination de la caractéristique pression-volume (2 ; 6, 9) est réalisée pendant le fonctionnement du dispositif d'étrier de frein et est utilisée pour compenser les phénomènes d'usure du dispositif d'étrier de frein.
